# EUROPEAN PATENT SPECIFICATION

(11) **EP 2 131 321 B1**
(45) Date of publication and mention of the grant of the patent: **27.06.2012**
(21) Application number: 07740424.2
(22) Date of filing: 29.03.2007
(51) Int. Cl.: G06T 1/00, G06T 7/00, H04N 5/225, G07C 9/00, G08B 13/196, G06K 9/00

(54) **IMAGING DEVICE, IMAGING METHOD, AND IMAGING PROGRAM**
ABBILDUNGSEINRICHTUNG, ABBILDUNGSVERFAHREN UND ABBILDUNGSPROGRAMM
DISPOSITIF D'IMAGERIE, PROCÉDÉ D'IMAGERIE ET PROGRAMME D'IMAGERIE

(43) Date of publication of application: 09.12.2009
(73) Proprietor: Fujitsu Limited, Kawasaki-shi, Kanagawa 211-8588 (JP)
(72) Inventor: AOKI, Takahiro, Kawasaki-shi Kanagawa 211-8588 (JP); HAMA, Soichi, Kawasaki-shi Kanagawa 211-8588 (JP); FUKUDA, Mitsuaki, Kawasaki-shi Kanagawa 211-8588 (JP)
(74) Representative: Kreutzer, Ulrich
(86) International application number: PCT/JP2007/056986
(87) International publication number: WO 2008/120395

(56) References cited:
- EP-A2- 1 388 802
- JP-A- 2004 297 518
- JP-A- 2005 242 766
- JP-A- 2006 120 084
- US-B1- 6 819 219

## Description

### Technical Field

The present invention relates to an image taking device, an image taking method and an image taking program in which a camera for taking a biometric image is used as a monitoring camera to output images that do not include biological characteristics that can be used for biometric authentication so as to prevent leakage of images including biological characteristics and monitor illicit acts in biometric authentication.

### Background Art

Recently, biometric authentication is used in various security systems, such as ATMs of banking facilities and entry/exit management systems for apartment buildings. However, biometric authentication devices or their peripheral devices are subject to various illicit acts. For example, there can be considered, in face authentication, a case where a person who is not a registrant of a face authentication device falsely presents a facial portrait of a given registrant so as to pass the face authentication. Further, there can be considered, in entry/exit management, a case where a person who is not a registrant of a biometric authentication device slips through the authentication by entering the door right behind a registrant. Further, when utilizing a biometrics-enabled ATM, a password can be observed by others. To prevent such illicit acts, there has been proposed a technique combining a biometric technology and a monitoring camera.

As a security system combining a biometric technology and a monitoring camera, there is known a suspicious person report system provided with a monitoring camera for catching a person coming into a multiple dwelling house, an image detection means for detecting a facial image of the person coming into the house, and a database in which resident data including a facial image are registered in advance. The system collates a facial image caught by the monitoring camera with facial images registered in the database to determine whether or not the person coming into the house is a resident. When determining the person coming into the house as a suspicious person, the system reports the suspicious person to the outside (refer to, e.g., Patent Document 1).

As a prior art relating to the present invention, there is known a method for picking up a personal image in which an optical system of a fingerprint recognition device is used to pick up not only a fingerprint image but also a personal image so as to increase security (refer to, e.g., Patent Document 2).
[Patent Document 1]
   Japanese Laid-open Patent Publication No. 2006-120084
[Patent Document 2]
   Japanese Laid-open Patent Publication No. 06-309447

### Disclosure of the Invention

### Problems to be Solved by the Invention

However, a direct output of an image photographed by a biometric authentication device may cause leakage of biometric information. The leakage of biometric information used for the purpose of authentication can be made not only by a malicious third party but also by an insider who can actually see a monitored image. For example, there can be considered a case where a security guard who manages the monitored image records it in, e.g., another recording medium, or where a system engineer or the like who manages a security system easily picks up the monitored image recorded in the biometric authentication device.

Unlike the password, the biological characteristic cannot be changed, so that once the biometric information is leaked, security in the subsequent biometric authentication cannot be guaranteed.

The present invention has been made to solve the above problems, and an object thereof is to provide an image taking device, an image taking method and an image taking program in which a camera for taking a biometric image is used as a monitoring camera to manage images that do not include biological characteristics that can be used for biometric authentication so as to prevent leakage of images including biological characteristics and monitor illicit acts in biometric authentication.

### Means for Solving the Problems

To solve the above problems, there is provided an image taking device that acquires a taken image from a camera capable of taking a predetermined region and uses the acquired taken image as a monitoring image or authentication image, including: a subject detection section that determines whether a biometric portion that can be used for biometric authentication of a subject is included in the image taking range of the camera; and a controller that handles the taken image as the authentication image when receiving an authentication image acquisition instruction and performs processing, in the case where there has not issued the authentication image acquisition instruction, such that when it is determined by the subject detection section that a biometric portion is not included in the image taking range of the camera, the controller uses the taken image as the monitoring image and when it is determined by the subject detection section that a biometric portion is included in the image taking range of the camera, the controller stops image taking operation of the camera.

In the image taking device according to the present invention, the subject detection section includes a distance measurement section that measures the distance between the subject and the camera, and a determination section that determines that the subject is included in the taken image in the case where the distance measured by the distance measurement section is smaller than a predetermined value.

Further, the image taking device includes: a difference image acquisition section that acquires a difference image between a first taken image obtained by performing image taking operation with the entire image taking region illuminated and a second taken image obtained by performing image taking operation with the entire image taking region and a region neighboring the camera which is smaller in size than the entire image taking region illuminated; and a monitoring image acquisition section that extracts a region having a brightness value of the difference image not smaller than a predetermined value and removes a taken object corresponding to the region having a brightness value not smaller than a predetermined value from the first or second taken image so as to obtain a monitoring image.

Further, there is provided an image taking device that acquires a taken image from a camera capable of taking a predetermined region and uses the acquired taken image as a monitoring image or authentication image, including: a comparison section that compares a taken image obtained through image taking operation performed at a predetermined timing with a registered biological characteristic; and a monitoring image selection processing section that handles the taken image as the monitoring image in the case where it is determined based on the comparison result of the comparison section that the taken image does not coincide with the registered biological characteristic and does not handle the taken image as the monitoring image in the case where it is determined based on the comparison result of the comparison section that the taken image coincides with the registered biological characteristic.

Further, there is provided an image taking method that acquires a taken image from a camera capable of taking a predetermined region and uses the acquired taken image as a monitoring image or authentication image, including: a subject detection step that determines whether a biometric portion that can be used for biometric authentication of a subject is included in the image taking range of the camera; and a control step that handles the taken image as the authentication image when receiving an authentication image acquisition instruction and performs processing, in the case where there has not issued the authentication image acquisition instruction, such that when it is determined in the subject detection step that a biometric portion is not included in the image taking range of the camera, the control step uses the taken image as the monitoring image and when it is determined in the subject detection step that a biometric portion is included in the image taking range of the camera, the control step stops image taking operation of the camera.

Further, there is provided an image taking method that acquires a taken image from a camera capable of taking a predetermined region and uses the acquired taken image as a monitoring image or authentication image, including: a first image taking step that performs image taking operation using the camera with the entire image taking region illuminated; a second image taking step that performs image taking operation using the camera with the entire image taking region and a region neighboring the camera which is smaller in size than the entire image taking region illuminated; a difference image acquisition step that acquires a difference image between a first taken image obtained in the first image taking step and a second taken image obtained in the second image taking step; and a monitoring image acquisition step that extracts a region having a brightness value of the difference image not smaller than a predetermined value and removes a taken object corresponding to the region having a brightness value not smaller than a predetermined value from the first or second taken image so as to obtain a monitoring image.

Further, there is provided an image taking method that acquires a taken image from a camera capable of taking a predetermined region and uses the acquired taken image as a monitoring image or authentication image, including: a comparison step that compares a taken image obtained through image taking operation performed at a predetermined timing with a registered biological characteristic; and a monitoring image selection processing step that handles the taken image as the monitoring image in the case where it is determined based on the comparison result of the comparison step that the taken image does not coincide with the registered biological characteristic and does not handle the taken image as the monitoring image in the case where it is determined based on the comparison result of the comparison section that the taken image coincides with the registered biological characteristic.

Further, there is provided an image taking program allowing a computer to execute an image taking method that acquires a taken image from a camera capable of taking a predetermined region and uses the acquired taken image as a monitoring image or authentication image, the program allowing the computer to execute: a subject detection step that determines whether a biometric portion that can be used for biometric authentication of a subject is included in the image taking range of the camera; and a control step that handles the taken image as the authentication image when receiving an authentication image acquisition instruction and performs processing, in the case where there has not issued the authentication image acquisition instruction, such that when it is determined in the subject detection step that a biometric portion is not included in the image taking range of the camera, the control step uses the taken image as the monitoring image and when it is determined in the subject detection step that a biometric portion is included in the image taking range of the camera, the control step stops image taking operation of the camera.

Further, there is provided an image taking program allowing a computer to execute an image taking method that acquires a taken image from a camera capable of taking a predetermined region and uses the acquired taken image as a monitoring image or authentication image, the program allowing the computer to execute: a first image taking step that performs image taking operation using the camera with the entire image taking region illuminated; a second image taking step that performs image taking operation using the camera with the entire image taking region and a region neighboring the camera which is smaller in size than the entire image taking region illuminated; a difference image acquisition step that acquires a difference image between a first taken image obtained in the first image taking step and a second taken image obtained in the second image taking step; and a monitoring image acquisition step that extracts a region having a brightness value of the difference image not smaller than a predetermined value and removes a taken object corresponding to the region having a brightness value not smaller than a predetermined value from the first or second taken image so as to obtain a monitoring image.

Further, there is provided an image taking program allowing a computer to execute an image taking method that acquires a taken image from a camera capable of taking a predetermined region and uses the acquired taken image as a monitoring image or authentication image, the program allowing the computer to execute: a comparison step that compares a taken image obtained through image taking operation performed at a predetermined timing with a registered biological characteristic; and a monitoring image selection processing step that handles the taken image as the monitoring image in the case where it is determined based on the comparison result of the comparison step that the taken image does not coincide with the registered biological characteristic and does not handle the taken image as the monitoring image in the case where it is determined based on the comparison result of the comparison section that the taken image coincides with the registered biological characteristic.

### Brief Description of the Drawings

FIG. 1 is a block diagram showing an example of the entire configuration of a first embodiment.
FIG. 2 is a view showing a self-locking door to which an authentication device according to the first embodiment is applied.
FIG. 3 is a view showing an example of an operation section of the authentication device according to the first embodiment.
FIG. 4 is a (first) flowchart showing the entire operation of the first embodiment.
FIG. 5 is a (second) flowchart showing the entire operation of the first embodiment.
FIG. 6 is a view showing a monitoring image acquisition timing in the first embodiment.
FIG. 7 is a view showing monitoring image suitability check processing in the first embodiment.
FIG. 8 is a flowchart showing monitoring image acquisition processing performed by a controller in the first embodiment.
FIG. 9 is a view showing an ATM controlled by the authentication device according to a second embodiment.
FIG. 10 is a view showing an effect obtained by the authentication device according to the second embodiment.
FIG. 11 is a block diagram showing an example of the entire configuration of the second embodiment.
FIG. 12 is a (first) view showing a method of taking the monitoring image in the second embodiment.
FIG. 13 is a (second) view showing a method of taking the monitoring image in the second embodiment.
FIG. 14 is a flowchart showing monitoring image generation processing of the second embodiment.
FIG. 15 is a view showing an example of the entire configuration of a third embodiment.
FIG. 16 is a flowchart showing monitoring image output/selection operation in the third embodiment.

### Best Mode for Carrying Out the Invention

Hereinafter, embodiments of an authentication device to which an image taking device according to the present invention will be described with reference to the accompanying drawings.

### First Embodiment

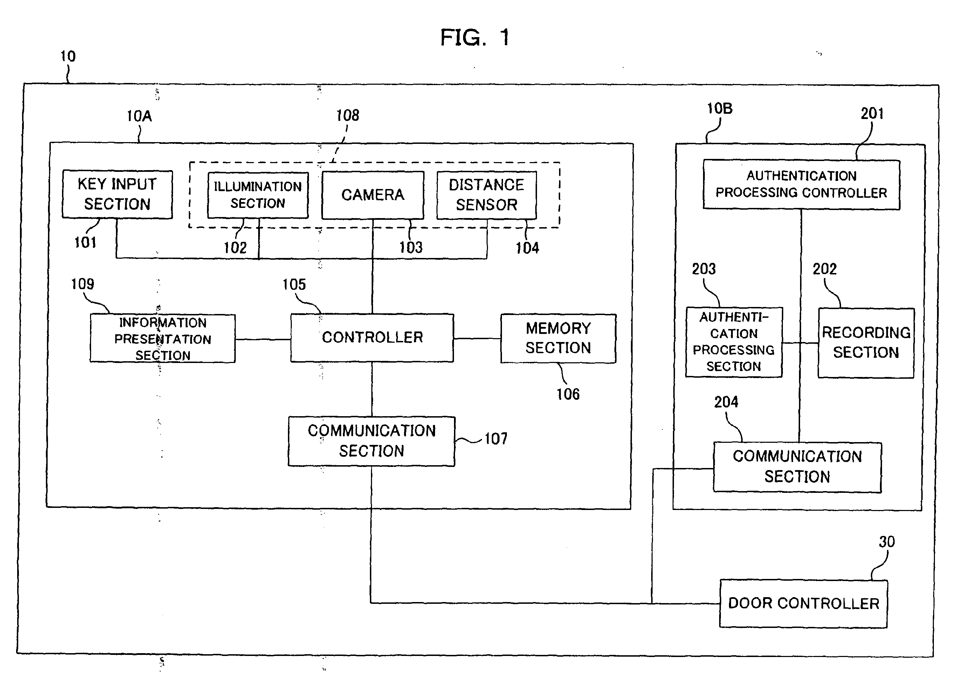

FIG. 1 is a block diagram showing an example to the entire configuration of the first embodiment.

An authentication device 10 in the first embodiment is constituted by an image taking device (image taking device of the present invention) 10A and an authentication processing device 10B and is configured to drive a door controller 30 that controls opening/closing of a door based on an authentication result.

The image taking device 10A includes a key input section 101, an image taking section 108, a controller 105, a memory section 106, and a communication section 107. The controller 105 corresponds to a controller of the present invention. The image taking section 108 includes an illumination section 102, a camera 103, and a distance sensor 104.

The authentication processing device 10B includes an authentication processing controller 201, a recording section 202, an authentication processing section 203, and a communication section 204. The authentication processing device 10B is preferably installed in a different location (e.g., control center) from where the image taking device 10A is installed.

The illumination section 102 illuminates a subject that the camera 103 photographs. The illumination section 102 is provided with a suitable member for performing image taking for authentication, such as an LED or an incandescent lamp.

In the present embodiment, an image photographed by the camera 103 is used as an authentication image or monitoring image. The camera 103 may be a CCD or a CMOS.

The distance sensor 104 projects an infrared light to measure the distance from a subject. Any measurement method may be employed as long as it cam measure the distance from a subject. The distance sensor corresponds to a subject detection section of the present invention.

The controller 105 controls the image taking section 108 in the manner as described later. The controller 105 stores an acquired ID and monitoring image taken by the camera 103 in the memory section 106. Further, based on an authentication result, the controlled 105 instructs the door controller 30 to perform door opening operation.

An information presentation section 109 presents information to a user to be authenticated. The information may be presented visually or aurally.

The communication section 107 exchanges data with the communication section 204 of the authentication processing device 10B and transmits an instruction from the controller 105 to the door controller 30 based on an authentication result. When transmitting data to the communication section 204, the communication section 107 encrypts the data. The network may be any of TCP/IP, USB, LAN, and wireless LAN, as long as it can exchange data.

The communication section 204 of the authentication processing device 10B exchanges data with the communication section 107 of the image taking device 10A. When receiving data from the communication section 107, the communication section 204 decrypts the data.

The recording section 202 of the authentication processing device 10B records a biometric image and ID in association with each other. Further, authentication execution times, authentication results, and monitoring images are also recorded in association with the IDs.

The authentication processing section 203 acquires, from the authentication processing controller 201, a biometric image (authentication image) transmitted from the image taking device 10A and compares it with a biometric image (registration image) registered in the recording section 202. In this comparison processing between the authentication image and registration image, the authentication processing section 203 extracts information (e.g., characteristic points) used for determining whether the authentication image and registration image have the same biological characteristic and performs the comparison processing using the extracted biometric information.

The authentication processing controller 201 receives the ID and image data from the image taking device 10A via the communication section 204. Further, the authentication processing controller 201 uses the ID as an argument to acquire a corresponding registration image from the recording section 202 and allows the authentication processing section 203 to perform the comparison processing between the acquired registration image and an authentication image.

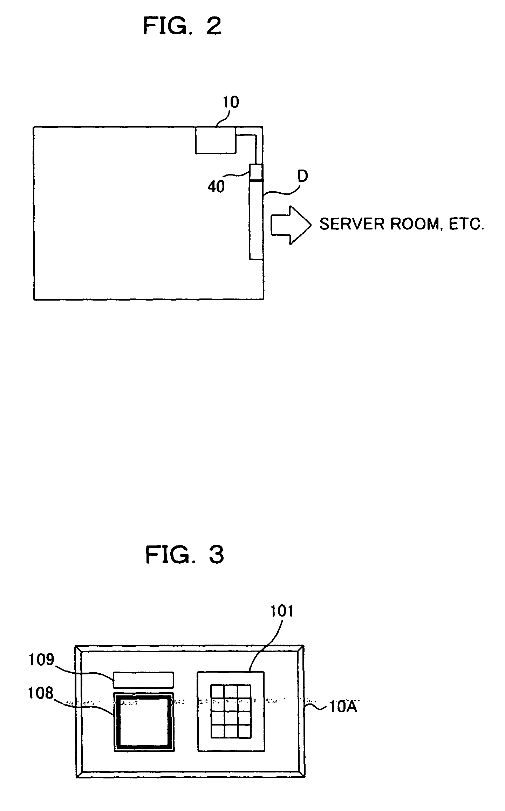

FIG. 2 is a view showing a self-locking door controlled by the authentication device, which is an application example of the authentication device according to the present embodiment. The self-locking door is installed at the entrance of a room requiring high security, such as a server room or apartment room. The self-locking door includes the authentication device 10 (or image taking device 10A) and door controller 30 that opens/closes a door D depending on an authentication result of the authentication device 10.

The authentication device 10 shown in FIG. 2 may be constructed as a stand-alone type or as a system in which the image taking operation section and authentication processing section are connected by a communication line. In the first embodiment, to prevent intrusion of a suspicious person, only when the authentication device 10 authenticates a person as a registrant that has previously been registered in the system, the door controller 30 unlocks the door. Although vein authentication is performed as the biometric authentication in the first embodiment, the configuration and operation of the first embodiment can be applied to biometric authentication based on another biometric image.

FIG. 3 is a view showing an example of a configuration of the image taking device 10A. The image taking device 10A includes a key input section 101 for a registrant to input, e.g., an ID, an image taking section 108 having a camera for acquiring a taken image, and an information presentation section 109 for presenting information:

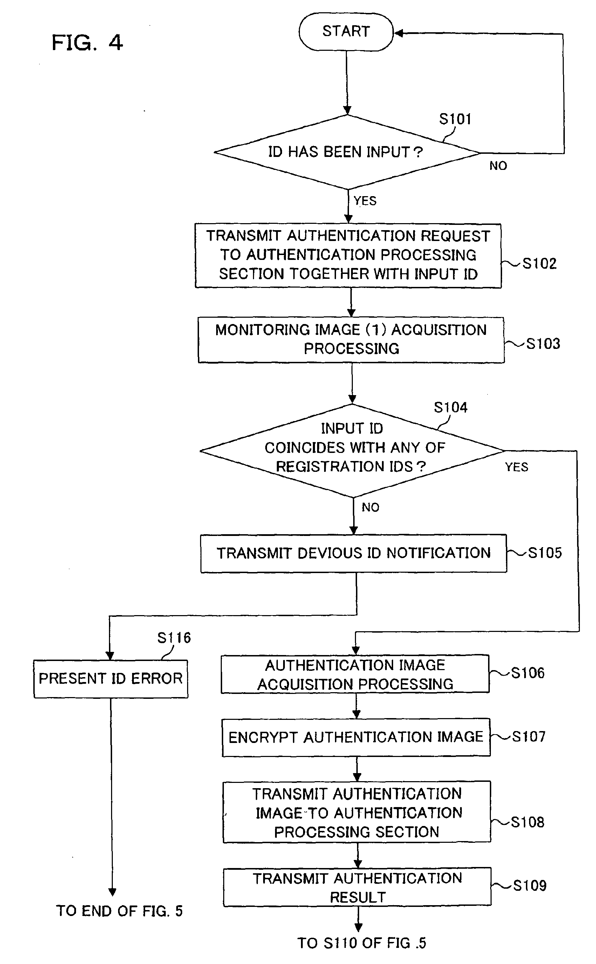

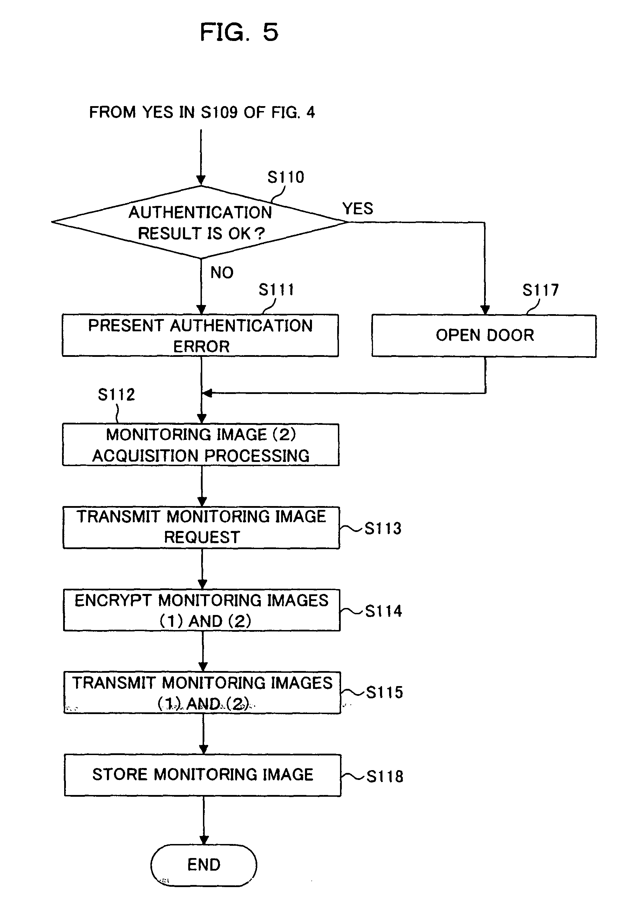

The entire operation of the first embodiment will next be described with reference to flowcharts of FIGS. 4 and 5.

The controller 105 of the image taking device 10A determines whether an ID has been input through the key input section 101 (S101).

When determining that an ID has been input (YES in S101), the controller 105 transmits an authentication request to the authentication processing device 10B together with the ID (input ID) via the communication section 107 (S102) and causes the camera 103 to take a monitoring image so as to acquire the monitoring image (S103).

Then, the authentication processing controller 201 of the authentication processing device 10B determines whether the input ID that has been transmitted thereto via the communication section 204 coincides with any of IDs (registration ID) recorded in the recording section 202 (S104).

When the input ID and registration ID coincide with each other (YES in S104), the authentication processing controller 201 transmits an authentication image request to the controller 105. Upon receiving the authentication image request, the controller 105 causes the camera 103 to take an authentication image and acquires the authentication image (S106).

Then, the controller 105 causes the communication section 107 to encrypt the authentication image (S107), and the communication section 107 transmits the authentication image to the communication section 204 of the authentication processing device 10B (S108). This operation is a part of the operation of a control step of the present invention.

The communication section 204 that has received the authentication image decrypts the encrypted authenticating image, and the authentication processing controller 201 that has acquired the authentication image from the communication section 204 causes the authentication processing section 203 to compare the authentication image with the registration image 202 corresponding to the input ID. After that, the authentication processing controller 201 transmits a result of the authentication to the controller 105 of the image taking device 10A (S109). The authentication result is information indicating OK or NG, i.e., whether the authentication image and registration image coincide with each other.

The controller 105 that has received the authentication result determines whether the authentication result indicates OK or NG (S110). When determining that the authentication result is OK (YES in S110), the controller 105 controls, via the communication section 107, the door controller 30 to open the door (S117) and causes the camera 103 to take a monitoring image once again so as to acquire the monitoring image (S112).

Then, the authentication processing controller 201 transmits a monitoring image request to the controller 105 (S113), and the controller 105 that has received the monitoring image request causes the communication section 107 to encrypt the monitoring image (S114) and transmit the encrypted monitoring image to the communication section 204 of the authentication processing device 10B (S115).

The communication section 204 that has received the monitoring image decrypts the encrypted monitoring image, and the authentication processing controller 201 that has acquired the monitoring image from the communication section 204 stores authentication execution times, authentication results, and monitoring images in the recording section 202 in association with the IDs (S118).

When determining that the authentication result is NG (NO in S110), the controller 105 causes the information presentation section 109 to present an authentication error (S111) and causes the camera 103 to take a monitoring image once again so as to acquire the monitoring image (S112).

When the input ID and registration ID do not coincide with each other (NO in S104), the authentication processing controller 201 transmits a devious ID notification to the controller 105 (S105). The controller 105 that has received the devious ID notification causes the information presentation section 109 to present an ID error (S116).

As to an encryption algorithm used in the encryption processing of steps S107 and S114, the authentication image requires higher security than the monitoring image, so that, for example, the communication section 107 encrypts the monitoring image using an encryption algorithm in which processing speed is put ahead of security and encrypts the authentication image using an encryption algorithm in which security is put ahead of processing speed, thereby achieving a good balance between reliability and processing speed.

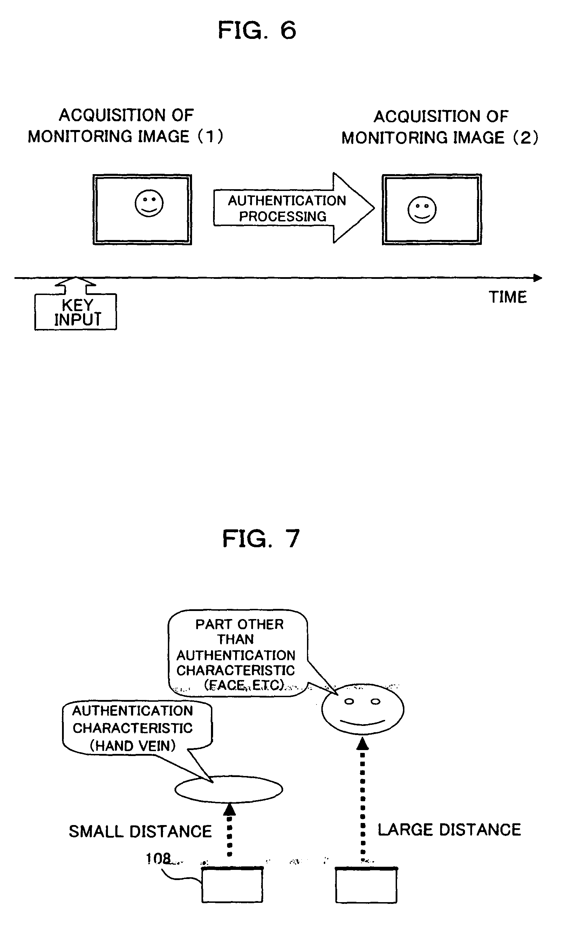

The timing at which the controller of the image taking device 10A acquires the monitoring image will next be described with reference to FIG. 6.

The controller 105 causes the camera 108 to acquire the monitoring image (1) at the time point when a key input is made to the key input section 101 and causes the camera to acquire the monitoring image (2) after the authentication processing. The monitoring image acquired by the controller 105 is temporarily stored in the memory section 106 before being transmitted to the authentication processing device 10B.

Monitoring image suitability check processing performed by the controller 105 of the image taking device 10A will next be described with reference to FIG. 7.

When acquiring the monitoring image, the distance sensor 104 of the image taking section 108 measures the distance from a subject. Then, when the measured distance is larger than a predetermined value, the controller 105 handles the image taken by the camera 103 as the monitoring image. On the other hand, when the measured distance is smaller than a predetermined value, the controller 105 stops image taking operation of the monitoring image performed by the camera 103. In the first embodiment, the biometric authentication is made using hand vein patterns as a thin linear biological characteristic. When an image of the hand vein is taken from a predetermined spaced distance, the image cannot be used for authentication. Thus, when the monitoring image suitability check is made based on the image taking distance, it is possible to prevent the biological characteristic that can be used for authentication from being taken as the monitoring image.

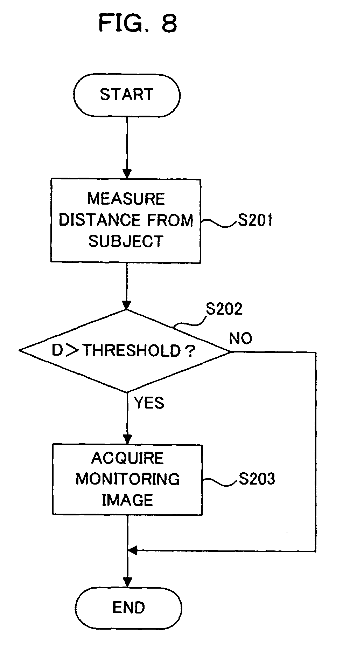

The monitoring image acquisition operation (part of the control step of the present invention) performed by the controller 105 in step S103 of FIG. 4 and step S112 of FIG. 5 will next be described with reference to FIG 8.

The controller 105 causes the distance sensor 104 to measure a distance (D) from a subject (subject detection step) and acquires the distance value (S201). When the D is not more than a preset threshold (NO in S202); the controller 105 determines that a biometric portion is included in the taken image (monitoring image) and ends the monitoring image acquisition processing. On the other hand, the D is larger than a preset threshold (YES in S202), the controller 105 keeps the camera 103 performing image taking operation so as to acquire the monitoring image (S203).

In the operation shown in FIG. 8, the exposure time of the camera 103 is set longer for the monitoring image than for the authentication image. By setting the exposure time longer for the monitoring image than for the authentication image, the F-value of the camera 103 can be decreased, thereby obtaining a clear monitoring image. Further, a subject of the authentication image is closer to the illumination section 102 than a subject of the monitoring image is, so that even if the biometric portion is included in the monitoring image, the biometric portion becomes white due to overexposure. Thus, a biological characteristic that can be used for authentication is not included in the monitoring image.

In the monitoring image acquisition processing of step S103, the controller 105 may acquire the monitoring image at a certain interval until the authentication processing is started. Further, in the monitoring image acquisition processing of step S112, the controller 105 may acquire the monitoring image at a certain interval within a predetermined time period.

With the configuration and operation described above, the authentication/monitoring system according to the first embodiment can take the authentication image and monitoring image using the same camera and prevent leakage of the authentication image.

### Second Embodiment

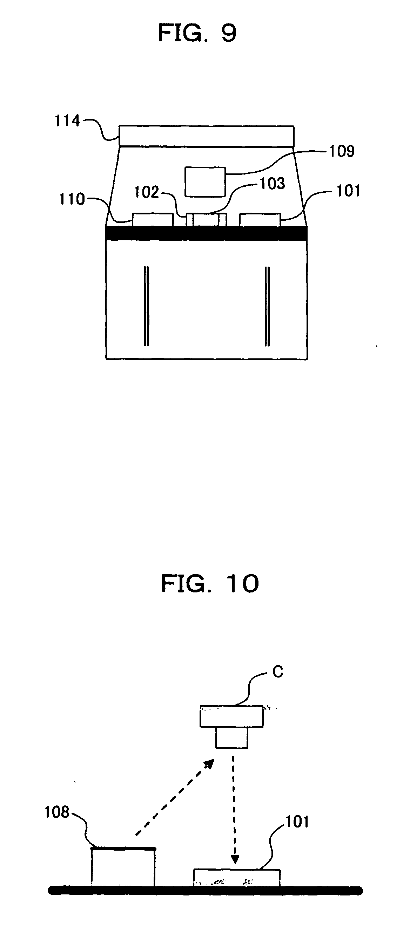

Hereinafter, a second embodiment in which the image taking device of the present invention is applied to an ATM controlled by the authentication device will be described. FIG. 9 is a view showing an ATM controlled by the authentication device according to the second embodiment.

Although the self-locking door controlled by the authentication device is used in the first embodiment, the second embodiment assumes the use of an ATM controlled by the authentication apparatus. An IC card read section 110 newly provided reads a cash card in which biometric information is stored together with account information. The key input section 101 in the second embodiment may be a touch panel. The image taking device 10A according to the second embodiment does not include the distance sensor 104; instead, the image taking device 10A utilizes a brightness difference in the image which is caused depending on presence/absence of an illumination of the illumination section 102 to remove a region where a biological characteristic is included, thereby preventing leakage of the monitoring image including the biological characteristic.

For example, in the ATM of a bank, there can be considered a configuration in which the image taking device 10A (image taking section 108) provided for performing biometric authentication functions as the monitoring camera during the time when the image taking device 10A does not perform the biometric authentication as shown in FIG. 10. In this case, the image taking device 10A monitors illicit actions such as one in which a camera C for stealing, e.g., a password is provided near the ATM, thereby preventing such illicit actions.

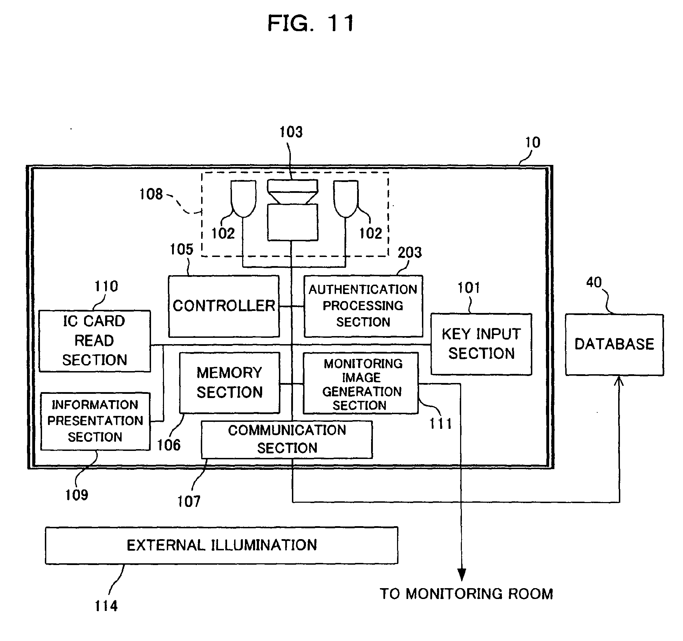

FIG. 11 is a block diagram showing an example of the entire configuration of the second embodiment. In FIG. 11, the same reference numerals as those in FIG. 3 denote the same or corresponding parts as those in FIG. 3, and the descriptions of the parts having the same constructions as the parts of the first embodiment are omitted here.

The configuration of the second embodiment differs from that of the first embodiment in the following points: the image taking device 10A and the authentication processing device 10B of the first embodiment are provided as the authentication device 10 in one casing; the distance sensor 104 is not provided in the authentication device 10 (image taking device 10A); an IC card read section 110 and a monitoring image generation section 111 are newly provided; and a database 40 corresponding to the recording section 202 is provided. In the second embodiment, since a registration image serving as biometric information is stored in a cash card to be read by the IC card read section 110, the database 40 does not retain the registration image. Further, since the monitoring image is transmitted by the monitoring image generation section 111 to a monitoring room where presence/absence of illicit actions is monitored, the database 40 does not retain the monitoring image, too. That is, the database 40 only records authentication execution times, authentication results, IDs, and passwords of cash cards in association with one another. Further, an external illumination 114 is provided outside the authentication device 10. The external illumination 114 is, for example, an indoor illumination. Preferably, the external illumination 114 emits a light having a different wavelength from that of a light emitted from the illumination section 102.

The monitoring image output from the monitoring image generation section 111 may be a video image and, in this case, the monitoring image generation section 111 may irreversibly compress the video data. Further, a video output mode of the monitoring image generation section 111 may be either a digital output mode or analog output mode.

The operation of the second embodiment will next be described focusing on different points from the first embodiment.

That is, the operation of the second embodiment differs from that of the first embodiment in the following points: the authentication processing section 203 is provided in the authentication device 10, so that the controller 105 performs operations performed by the authentication processing controller 201 except for the operation concerning the communication section 204; when causing the authentication processing section 203 to perform authentication processing, the controller 105 acquires a registration image from the cash card, extracts information (e.g., characteristic points) used for determining whether the authentication image and the registration image have the same biological characteristic, and performs processing using the extracted biometric information; and the controller 105 collates the password of the cash card with a password stored in the database 40. Further, since the distance sensor 104 is not provided and the monitoring image generation section 111 is newly provided, the operation for preventing the authentication image from being included in the monitoring image differs from that of the first embodiment.

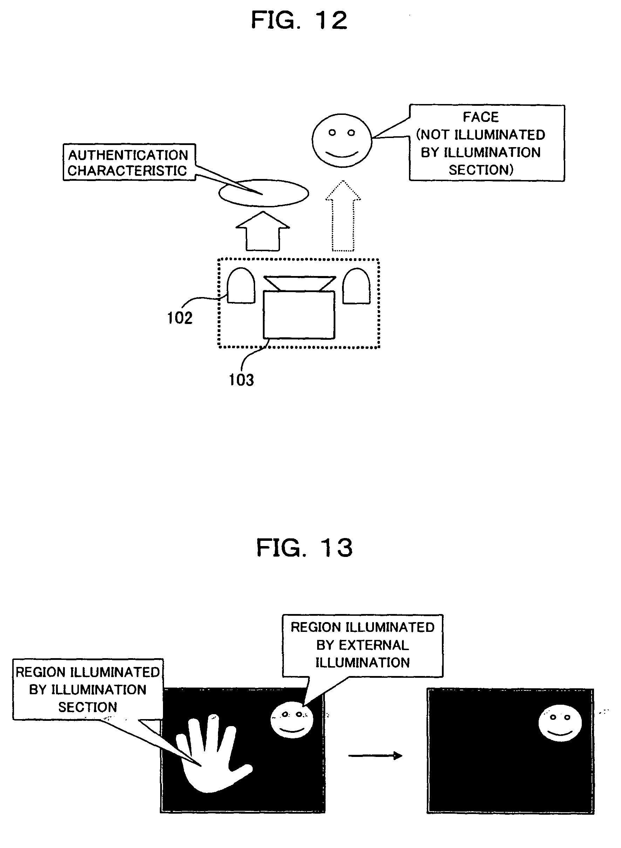

FIGS. 12 and 13 are views each showing a method of taking the authentication image and monitoring image in the second embodiment.

In the second embodiment, as shown in FIG 12, the monitoring image generation section 111 utilizes a brightness difference in the image which is caused depending on presence/absence of an illumination of the illumination section 102 to remove a subject from the taken image under the illumination of the external illumination 114 provided in the room where the ATM is installed to thereby obtain the monitoring image. The monitoring image generation section 111 causes the camera 103 to take an image of a subject both in a state where the illumination section 102 illuminates the subject (illumination ON) and a state where the illumination section 102 does not illuminate the subject (illumination OFF).

Then, as shown in FIG. 13, the monitoring image generation section 111 1 compares the brightness values at the same coordinates in the illumination ON image and illumination OFF image and extracts regions where the brightness values are equal between the illumination ON image and illumination OFF image, to thereby generate a monitoring image that does not include biological characteristics that can be used for authentication. The monitoring image generation section 111 constitutes a difference image acquisition section and a monitoring image acquisition section of the present invention.

In the case where the external illumination is not provided in the room where the ATM is installed, the external illumination 114 may be provided outside or near the authentication device 10.

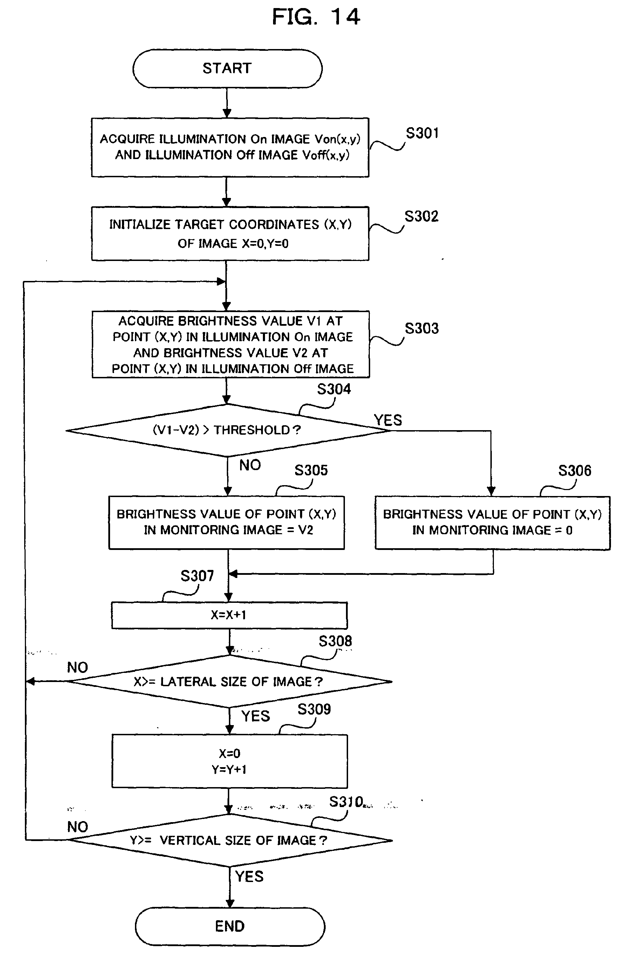

FIG. 14 is a flowchart showing operation of the monitoring image generation section according to the second embodiment.

The monitoring image generation section 111 acquires the illumination ON image and illumination OFF image (S301), assigns 0 to variables X and Y representing coordinates to be acquired to initialize target coordinates (S302), and acquires a brightness value V1 of the illumination ON image pixel (X, Y) and brightness value V2 of the illumination OFF image pixel (X, Y) (S303). After that, the monitoring image generation section 111 generates and acquires a difference image by subtracting V2 from V1 (difference image generation step) and determines whether the brightness value in the difference image is larger than a predetermined threshold (S304).

When a value obtained by subtracting V2 from V1 is larger (or not smaller) than a predetermined threshold (YES in S304), the monitoring image generation section 111 sets the brightness value of the monitoring image pixel (X,Y) to 0 (S306), assigns X+1 to X (S307), and determines whether X is not smaller than the number of pixels constituting the monitoring image in the lateral direction (S308).

When X is not smaller than the number of pixels constituting the monitoring image in the lateral direction (YES in S308), the monitoring image generation section 111 assigns 0 and Y+1 to X and Y, respectively (S309) and determines whether Y is not smaller than the number of pixels constituting the monitoring image in the vertical direction (S310).

When Y is not smaller than the number of pixels constituting the monitoring image in the vertical direction (YES in S31 0), the monitoring image generation section 111 ends the processing.

When Y is smaller than the number of pixels constituting the monitoring image in the vertical direction (NO in S310), the monitoring image generation section 111 acquires once again the brightness value V1 of the illumination ON image pixel (X, Y) and brightness value V2 of the illumination OFF image pixel (X, Y)(S303).

When X is smaller than the number of pixels constituting the monitoring image in the lateral direction (NO in S308), the monitoring image generation section 111 acquires once again the brightness value V1 of the illumination ON image pixel (X, Y) and brightness value V2 of the illumination OFF image pixel (X, Y)(S303).

When a value obtained by subtracting V2 from V1 is not larger than a predetermined threshold (NO in S304), the monitoring image generation section 111 sets the brightness value of the monitoring image pixel (X,Y) to V2 (S305) and assigns X+1 to X (S307).

An authentication characteristic portion included in the monitoring image is blackened through the operation of step S306 in the above monitoring image generation processing. On the other hand, the brightness values of portions in the monitoring image other than the authentication characteristic point are kept at the same values as those before the processing through the operation of step S305. Further, 0 and V2 are assigned to the brightness respectively for all the pixels constituting the monitoring image through the operations from steps S307 to S310, whereby all the authentication characteristic portions that can be used for authentication are blackened. Further, in the case where a video image is output from the monitoring image generation section 111, the above processing is performed for all the frames included in the video image.

With the above operation, the monitoring image generation section 111 according to the second embodiment can output a monitoring image or monitoring video image without leaking authentication characteristics.

### Third Embodiment

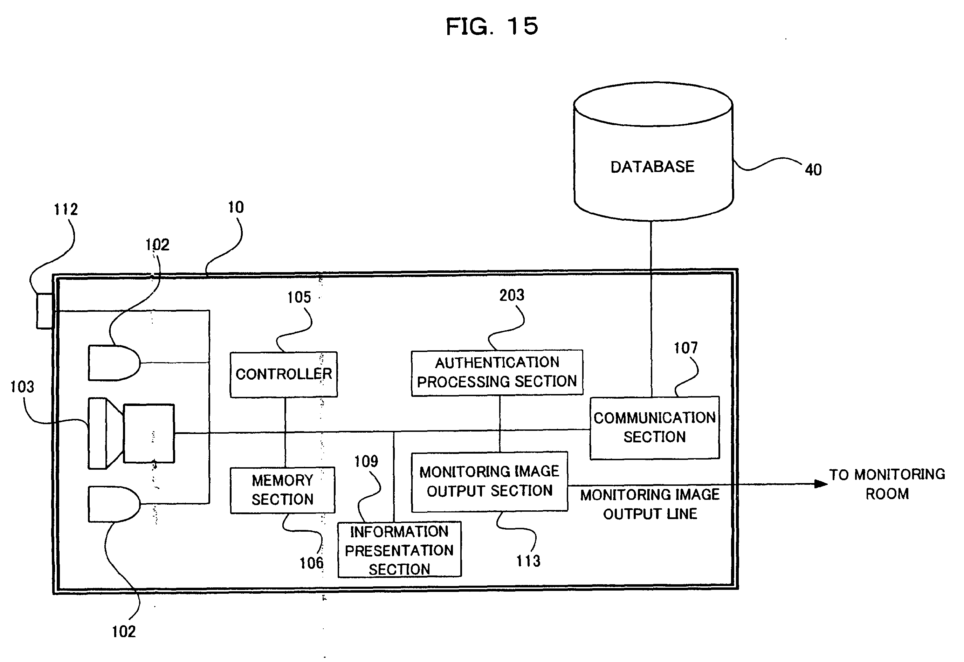

Hereinafter, a third embodiment in which the image taking device of the present invention is applied to the authentication device will be described. FIG. 15 is a view showing the entire configuration of the third embodiment.

The authentication device 10 of the third embodiment differs from the authentication device 10 of the second embodiment in that it does not include the IC card read section 110, key input section 101, and monitoring image output section 113 but newly includes an authentication start switch 112 and a monitoring image output section 113. In the third embodiment, personal authentication is made without a use of an ID or password but based on 1:N authentication in which only biometric authentication is performed. In this case, since the key input section 101 used for a user to input the password or ID is not provided in the monitoring device 10, the biometric authentication is started upon depression of the authentication start switch 112. In the case where the biometric authentication is made based on hand vein recognition, the authentication start switch 112 is arranged in a position that a user to be image-taken can depress with his finger; while in the case where the biometric authentication is made based on face recognition, the authentication start switch 112 is arranged at the foot of a user to be image-taken.

The database 40 stores authentication execution times, authentication results, and registration images as biometric images. The monitoring image output section 113 transmits the monitoring image to the monitoring room.

The operation of the third embodiment will next be described.

In the authentication device 10 of the third embodiment, the authentication processing section 203 checks whether the authentication characteristic is included in an image taken as the monitoring image. Even if the authentication start switch 112 is not depressed, the controller 105 causes the camera 103 to take an image at a constant time interval, acquires the taken image, and transmits the acquired image to the authentication processing section 203. The authentication processing section 203 refers to the database 40 to thereby collate all the registration images and all the taken images with each other and returns to the controller 105 the similarity between a registration image and a taken image between which the biological characteristics coincide best with each other. In this collation between the authentication images and all the registration images, the authentication processing section 203 extracts information (e.g., characteristic points) used for determining whether the authentication image and registration image have the same biological characteristic, and performs the comparison processing using the extracted biometric information so as to calculate the similarity.

The higher the coincidence between the authentication image and registration image, the higher the similarity becomes, and the lower the coincidence between the authentication image and registration image, the lower the similarity. That is the taken image having the lower similarity is less likely to be used for illicit authentication even if it is used as the monitoring image. Hereinafter, the monitoring image acquisition operation will be described. The controller 105 in the third embodiment constitutes a monitoring image selection processing section of the present invention. Further, the authentication processing section 203 constitutes a comparison section of the present invention.

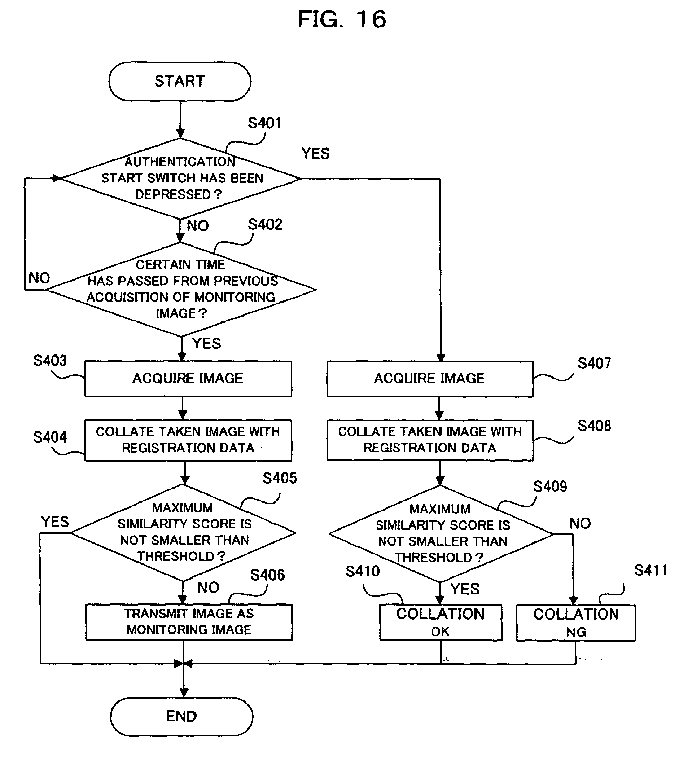

FIG. 16 is a flowchart showing the monitoring image acquisition operation in the third embodiment.

The controller 105 determines whether the authentication start switch 112 has been depressed (S401).

When determining that the authentication start switch 401 has been depressed (YES in S401), the controller 105 causes the camera 103 to take a subject, acquires the taken image (S407), causes the authentication processing section 203 to collate the taken image with registration images stored in the database 40 (S408), and determines whether the maximum similarity score that has been calculated as the collation result is not smaller than a threshold (S409).

When the maximum similarity score is not smaller than a threshold (YES in S409), the authentication processing section 203 determines that there exists a registration image that coincides with the taken image and returns a result "collation OK" to the controller 105 (S41 0).

On the other hand, when the maximum similarity score is smaller than a threshold (NO in S409), the authentication processing section 203 determines that there does not exist a registration image that coincides with the taken image and returns a result "collation NG" to the controller 105 (S411).

When determining that the authentication start switch has not been depressed (NO in S401), the controller 105 determines whether a certain time has passed after the previous acquisition of the monitoring image (S402).

When determining that a certain time has passed after the previous acquisition of the monitoring image (YES in S402), the controller 105 causes the camera 103 to take a subject and acquires the taken image (S403), causes the authentication processing section 203 to collate the taken image with registration images stored in the database 40 (S404), and determines whether the maximum similarity score that has been calculated as the collation result is not smaller than a threshold (S405: comparison step).

When the maximum similarity score is not smaller than a threshold (YES in S405), the authentication processing section 203 ends the processing.

On the other hand, when the maximum similarity score is smaller than a threshold (NO in S405), the controller 105 transmits the taken image to the monitoring image output section 113 as the monitoring image based on the authentication result of the authentication processing section 203 (S406: monitoring image selection processing step).

When determining that a certain time has not passed after the previous acquisition of the monitoring image (NO in S402), the controller 105 determines once again whether the authentication start switch 112 has been depressed (S401).

With the above operation, the authentication device 10 can output a monitoring image that does not include the biological characteristic that can be used for biometric authentication.

Further, it is possible to provide a program that allows a computer to execute the above operation shown in the flowcharts and respective steps of the embodiments as an image taking program. By storing the above program in a computer-readable storage medium, it is possible to allow the computer to execute the program. The computer mentioned here includes a host device like a personal computer, a controller of a test device, a controller of a storage device, such as an MRU or CPU, and the like. The computer-readable medium mentioned here includes: a portable storage medium such as a CD-ROM, a flexible disk, a DVD disk, a magneto-optical disk, or an IC card; a database that holds computer program; another computer and database thereof; and a transmission medium on a network line.

### Industrial applicability

As described above, according to the present invention, a camera for taking a biometric image is used as a security camera to output a monitoring image that does not include biological characteristics that can be used for biometric authentication, thereby preventing leakage of biological characteristics and allowing monitoring of illicit acts in biometric authentication.

(Additional Remark 1) An image taking device that acquires a taken image from a camera capable of taking a predetermined region and uses the acquired taken image as a monitoring image or authentication image, the device comprising:
a subject detection section that determines whether a biometric portion that can be used for biometric authentication of a subject is included in the image taking range of the camera; and
a controller that handles the taken image as the authentication image when receiving an authentication image acquisition instruction and performs processing, in the case where there has not issued the authentication image acquisition instruction, such that when it is determined by the subject detection section that a biometric portion is not included in the image taking range of the camera, the controller uses the taken image as the monitoring image and when it is determined by the subject detection section that a biometric portion is included in the image taking range of the camera, the controller stops image taking operation of the camera.
(Additional Remark 2) The image taking device according to additional remark 1, wherein
the subject detection section includes a distance measurement section that measures the distance between the subject and the camera, and a determination section that determines that the subject is included in the taken image in the case where the distance measured by the distance measurement section is smaller than a predetermined value.
(Additional Remark 3) The image taking device according to additional remark 2, wherein
at the time of taking the monitoring image, the controller changes an image taking condition of the camera such that the biometric portion cannot be taken by the camera.
(Additional Remark 4) The image taking device according to additional remark 1, wherein
the controller handles, as the monitoring image, a taken image which has been taken under the image taking condition of the camera that its exposure value is greatly changed from that at the time of taking the authentication image.
(Additional Remark 5) An image taking device comprising:
a difference image acquisition section that acquires a difference image between a first taken image obtained by performing image taking operation with the entire image taking region illuminated and a second taken image obtained by performing image taking operation with the entire image taking region and a region neighboring the camera which is smaller in size than the entire image taking region illuminated; and
a monitoring image acquisition section that extracts a region having a brightness value of the difference image not smaller than a predetermined value and removes a taken object corresponding to the region having a brightness value not smaller than a predetermined value from the first or second taken image so as to obtain a monitoring image.
(Additional Remark 6) The image taking device according to additional remark 5, wherein
illumination lights of the first and second illumination sections have different wavelengths.
(Additional Remark 7) An image taking device that acquires a taken image from a camera capable of taking a predetermined region and uses the acquired taken image as a monitoring image or authentication image, the device comprising:
a comparison section that compares a taken image obtained through image taking operation performed at a predetermined timing with a registered biological characteristic; and
a monitoring image selection processing section that handles the taken image as the monitoring image in the case where it is determined based on the comparison result of the comparison section that the taken image does not coincide with the registered biological characteristic and does not handle the taken image as the monitoring image in the case where it is determined based on the comparison result of the comparison section that the taken image coincides with the registered biological characteristic.
(Additional Remark 8) The image taking device according to additional remark 7, wherein
the comparison section is constituted by a 1:N authentication device.
(Additional Remark 9) An image taking method that acquires a taken image from a camera capable of taking a predetermined region and uses the acquired taken image as a monitoring image or authentication image, the method comprising:
determining whether a biometric portion that can be used for biometric authentication of a subject is included in the image taking range of the camera; and
processing the taken image as the authentication image when receiving an authentication image acquisition instruction and alternatively, in the case where there has not issued the authentication image acquisition instruction, when it is determined that a biometric portion is not included in the image taking range of the camera, processing the taken image as the monitoring image and when it is determined that a biometric portion is included in the image taking range of the camera, stopping image taking operation of the camera.
(Additional Remark 10) The image taking method according to additional remark 9, wherein
the determination is made such that the subject is included in the taken image when a distance measured between the subject and the camera is smaller than a predetermined value.
(Additional Remark 11) The image taking method according to additional remark 10, wherein
in the processing of the taken image as the monitoring image, an image taking condition is changed such that the biometric portion cannot be taken by the camera.
(Additional Remark 12) The image taking method according to additional remark 10, wherein
in the processing of the taken image as the monitoring image, a taken image which has been taken under the image taking condition of the camera that its exposure value is greatly changed from that at the time of taking the authentication image is processed as the monitoring image.
(Additional Remark 13) An image taking method that acquires a taken image from a camera capable of taking a predetermined region and uses the acquired taken image as a monitoring image or authentication image, the method comprising:
performing image taking operation using the camera with the entire image taking region illuminated;
performing image taking operation using the camera with the entire image taking region and a region neighboring the camera which is smaller in size than the entire image taking region illuminated;
acquiring a difference image between a first taken image obtained in an image taking with the region neighboring the camera not illuminated step and a second taken image obtained in the second image with the region neighboring the camera illuminated; and
acquiring a monitoring image by extracting a region having a brightness value of the difference image not smaller than a predetermined value and removing a taken object corresponding to the region having a brightness value not smaller than a predetermined value from the first or second taken image.
(Additional Remark 14) An image taking method that acquires a taken image from a camera capable of taking a predetermined region and uses the acquired taken image as a monitoring image or authentication image, the method comprising:
comparing a taken image obtained through image taking operation performed at a predetermined timing with a registered biological characteristic; and
processing the taken image as the monitoring image in the case where it is determined based on the comparison result that the taken image does not coincide with the registered biological characteristic and not processing the taken image as the monitoring image in the case where it is determined based on the comparison result of the comparing that the taken image coincides with the registered biological characteristic.
(Additional Remark 15) A computer-readable medium having recorded thereon an image taking program allowing a computer to execute an image taking method that acquires a taken image from a camera capable of taking a predetermined region and uses the acquired taken image as a monitoring image or authentication image, the program allowing the computer to execute a process comprising:
determining whether a biometric portion that can be used for biometric authentication of a subject is included in the image taking range of the camera; and
processing the taken image as the authentication image when receiving an authentication image acquisition instruction and alternatively, in the case where there has not issued the authentication image acquisition instruction, when it is determined that a biometric portion is not included in the image taking range of the camera, processing the taken image as the monitoring image and when it is determined that a biometric portion is included in the image taking range of the camera, stopping image taking operation of the camera.
(Additional Remark 16) The computer-readable medium according to additional remark 15, wherein
the determination is made such that the subject is included in the taken image when a distance measured between the subject and the camera is smaller than a predetermined value.
(Additional Remark 17) The computer-readable medium according to additional remark 15, wherein
in the processing of the taken image as the monitoring image, an image taking condition is changed such that the biometric portion cannot be taken by the camera.
(Additional Remark 18) The computer-readable medium according to additional remark 17, wherein
in the processing of the taken image as the monitoring image, a taken image which has been taken under the image taking condition of the camera that its exposure value is greatly changed from that at the time of taking the authentication image is processed as the monitoring image.
(Additional Remark 19) The computer-readable medium having recorded thereon an image taking program allowing a computer to execute an image taking method that acquires a taken image from a camera capable of taking a predetermined region and uses the acquired taken image as a monitoring image or authentication image, the program allowing the computer to execute a process comprising:
performing image taking operation using the camera with the entire image taking region illuminated;
performing image taking operation using the camera with the entire image taking region and a region neighboring the camera which is smaller in size than the entire image taking region illuminated;
acquiring a difference image between a first taken image obtained in an image taking with the region neighboring the camera not illuminated step and a second taken image obtained in the second image with the region neighboring the camera illuminated; and acquiring a monitoring image by extracting a region having a brightness value of the difference image not smaller than a predetermined value and removing a taken object corresponding to the region having a brightness value not smaller than a predetermined value from the first or second taken image.
(Additional Remark 20) The computer-readable medium having recorded thereon an image taking program allowing a computer to execute an image taking method that acquires a taken image from a camera capable of taking a predetermined region and uses the acquired taken image as a monitoring image or authentication image, the program allowing the computer to execute a process comprising:
comparing a taken image obtained through image taking operation performed at a predetermined timing with a registered biological characteristic; and
processing the taken image as the monitoring image in the case where it is determined based on the comparison result that the taken image does not coincide with the registered biological characteristic and not processing the taken image as the monitoring image in the case where it is determined based on the comparison result of the comparing that the taken image coincides with the registered biological characteristic.

## Claims

1. An image taking device (10) that acquires a taken image from a camera capable of taking a predetermined region and uses the acquired taken image as a monitoring image or authentication image, the device comprising:
a subject detection section (104) that determines whether a biometric portion that can be used for biometric authentication of a subject is included in the image taking range of the camera; and
a controller (105) that handles the taken image as the authentication image when receiving an authentication image acquisition instruction and performs processing, in the case where there has not issued the authentication image acquisition instruction, such that when it is determined by the subject detection section that a biometric portion is not included in the image taking range of the camera, the controller uses the taken image as the monitoring image and when it is determined by the subject detection section that a biometric portion is included in the image taking range of the camera, the controller stops image taking operation of the camera.

2. The image taking device according to claim 1, wherein
the subject detection section includes a distance measurement section (104) that measures the distance between the subject and the camera, and a determination section that determines that the subject is included in the taken image in the case where the distance measured by the distance measurement section is smaller than a predetermined value.

3. The image taking device according to claim 2, wherein
at the time of taking the monitoring image, the controller changes an image taking condition of the camera such that the biometric portion cannot be taken by the camera.

4. The image taking device according to claim 1, wherein
the controller handles, as the monitoring image, a taken image which has been taken under the image taking condition of the camera that its exposure value is greatly changed from that at the time of taking the authentication image.

5. An image taking method that acquires a taken image from a camera capable of taking a predetermined region and uses the acquired taken image as a monitoring image or authentication image, the method comprising:
a subject detection step (S 201) that determines whether a biometric portion that can be used for biometric authentication of a subject is included in the image taking range of the camera; and
a control step (S 103, S 107, S 112) that handles the taken image as the authentication image when receiving an authentication image acquisition instruction and performs processing, in the case where there has not issued the authentication image acquisition instruction, such that when it is determined in the subject detection step that a biometric portion is not included in the image taking range of the camera, the control step uses the taken image as the monitoring image and when it is determined in the subject detection step (S201) that a biometric portion is included in the image taking range of the camera, the control step stops image taking operation of the camera.

6. The image taking method according to claim 5, wherein
the subject detection step includes a distance measurement step that measures the distance between the subject and the camera, and a determination step that determines that the subject is included in the taken image in the case where the distance measured in the distance measurement step is' smatter than a predetermined value.

7. The image taking device according to claim 6, wherein
at the time of taking the monitoring image, the control step changes an image taking condition of the camera such that the biometric portion cannot be taken by the camera.

8. The image taking method according to claim 6, wherein
the control step handles, as the monitoring image, a taken image which has been taken under the image taking condition of the camera that its exposure value is greatly changed from that at the time of taking the authentication image.

9. A computer-readable medium having recorded thereon an image taking program allowing a computer to execute an image taking method that acquires a taken image from a camera capable of taking a predetermined region and uses the acquired taken image as a monitoring image or authentication image, the program allowing the computer to execute a process comprising:
a subject detection step that determines whether a biometric portion that can be used for biometric authentication of a subject is included in the image taking range of the camera; and
a control step that handles the taken image as the authentication image when receiving an authentication image acquisition instruction and performs processing, in the case where there has not issued the authentication image acquisition instruction, such that when it is determined in the subject detection step that a biometric portion is not included in the image taking range of the camera, the control step uses the taken image as the monitoring image and when it is determined in the subject detection step that a biometric portion is included in the image taking range of the camera, the control step stops image taking operation of the camera.

10. The computer-readable medium according to claim 9, wherein
the subject detection step includes a distance measurement step that measures the distance between the subject and the camera, and a determination step that determines that the subject is included in the taken image in the case where the distance measured by the distance measurement section is smaller than a predetermined value.

11. The computer-readable medium according to claim 9, wherein
at the time of taking the monitoring image, the control step changes an image taking condition of the camera such that the biometric portion cannot be taken by the camera.

12. The computer-readable medium according to claim 11, wherein
the control step handles, as the monitoring image, a taken image which has been taken under the image taking condition of the camera that its exposure value is greatly changed from that at the time of taking the authentication image.

## Patentansprüche

1. Bildaufnahmeeinrichtung (10), welche ein aufgenommenes Bild von einer Kamera erlangt, die geeignet ist zum Aufnehmen eines vorbestimmten Bereichs, und das erlangte aufgenommene Bild als ein Überwachungsbild oder Authentifizierungsbild verwendet, wobei die Einrichtung umfasst:
einen Subjekt-Erfassungsabschnitt (104), welcher bestimmt, ob ein biometrischer Teil, welcher für biometrische Authentifizierung eines Subjekts verwendet werden kann, in dem Bildaufnahmebereich der Kamera beinhaltet ist; und
einen Controller (105), welcher das aufgenommene Bild als das Authentifizierungsbild handhabt, wenn ein Authentifizierungsbild-Erlangungsbefehl empfangen wird, und eine Verarbeitung durchführt, in dem Fall, in welchem der Authentifizierungsbild-Erlangungsbefehl nicht ausgegeben wurde, so dass, wenn durch den Subjekt-Erfassungsabschnitt bestimmt wird, dass ein biometrischer Teil nicht in dem Bildaufnahmebereich der Kamera beinhaltet ist, der Controller das erfasste Bild als das Überwachungsbild verwendet und, wenn durch den Subjekt-Erfassungsabschnitt bestimmt wird, dass ein biometrischer Teil in dem Bildaufnahmebereich der Kamera beinhaltet ist, der Controller die Bildaufnahmeoperation der Kamera stoppt.

2. Bildaufnahmeeinrichtung nach Anspruch 1, wobei der Subjekt-Erfassungsabschnitt beinhaltet einen Distanzmessabschnitt (104), welcher die Distanz zwischen dem Subjekt und der Kamera misst, und einen Bestimmungsabschnitt, welcher bestimmt, dass das Subjekt in dem aufgenommenen Bild beinhaltet ist, in dem Fall, in welchem die Distanz, die durch den Distanzmessabschnitt gemessen wird, kleiner ist als ein vorbestimmter Wert.

3. Bildaufnahmeeinrichtung nach Anspruch 2, wobei, zum Zeitpunkt des Aufnehmens des Überwachungsbilds, der Controller einen Bildaufnahmezustand der Kamera ändert, so dass der biometrische Teil nicht durch die Kamera aufgenommen werden kann.

4. Bildaufnahmeeinrichtung nach Anspruch 1, wobei der Controller als das Überwachungsbild ein aufgenommenes Bild handhabt, welches unter dem Bildaufnahmezustand der Kamera aufgenommen wurde, dass der Belichtungswert deutlich geändert wurde von dem zu der Zeit des Aufnehmens des Authentifizierungsbildes.

5. Bildaufnahmeverfahren, welches ein aufgenommenes Bild von einer Kamera erlangt, welche geeignet ist zum Aufnehmen eines vorbestimmten Bereichs, und das erlangte aufgenommene Bild als ein Überwachungsbild oder Authentifizierungsbild verwendet, wobei das Verfahren umfasst:
einen Subjekt-Erfassungsschritt (S201), welcher bestimmt, ob ein biometrischer Teil, welcher für biometrische Authentifizierung eines Subjekts verwendet werden kann, in dem Bildaufnahmebereich der Kamera beinhaltet ist; und
einen Steuerschritt (S103, S107, S112), welcher das aufgenommene Bild als das Authentifizierungsbild handhabt, wenn ein Authentifizierungsbild-Erlangungsbefehl empfangen wird, und eine Verarbeitung durchführt, in dem Fall, in welchem der Authentifizierungsbild-Erlangungsbefehl nicht ausgegeben wurde, so dass, wenn in dem Subjekt-Erfassungsschritt bestimmt wird, dass ein biometrischer Teil nicht in dem Bildaufnahmebereich der Kamera beinhaltet ist, der Steuerschritt das aufgenommene Bild als das Überwachungsbild verwendet und, wenn in dem Subjekt-Erfassungsschritt (S201) bestimmt wird, dass ein biometrischer Teil in dem Bildaufnahmebereich der Kamera beinhaltet ist, der Steuerschritt die Bildaufnahmeoperation der Kamera stoppt.

6. Bildaufnahmeverfahren nach Anspruch 5, wobei der Subjekt-Erfassungsschritt beinhaltet einen Distanzmessschritt, welcher die Distanz zwischen dem Subjekt und der Kamera misst, und einen Bestimmungsschritt, welcher bestimmt, dass das Subjekt in dem aufgenommenen Bild beinhaltet ist, in dem Fall, in welchem die Distanz, die in dem Distanzmessschritt gemessen wird, kleiner ist als ein vorbestimmter Wert.

7. Bildaufnahmeeinrichtung nach Anspruch 6, wobei, zur Zeit des Aufnehmens des Überwachungsbilds, der Steuerschritt einen Bildaufnahmezustand der Kamera ändert, so dass der biometrische Teil nicht durch die Kamera aufgenommen werden kann.

8. Bildaufnahmeverfahren nach Anspruch 6, wobei der Steuerschritt als das Überwachungsbild ein aufgenommenes Bild handhabt, welches unter dem Bildaufnahmezustand der Kamera aufgenommen wurde, dass der Belichtungswert deutlich geändert wurde von dem zu der Zeit des Aufnehmens des Authentifizierungsbildes.

9. Computer-lesbares Medium, welches darauf aufgenommen ein Bildaufnahmeprogramm hat, welches es einem Computer ermöglicht, ein Bildaufnahmeverfahren auszuführen, welches ein aufgenommenes Bild von einer Kamera erlangt, die geeignet ist zum Aufnehmen eines vorbestimmten Bereichs, und das erlangte aufgenommene Bild als ein Überwachungsbild oder Authentifizierungsbild verwendet, wobei das Programm es ermöglicht, dass der Computer die Verarbeitung ausführt, umfassend:
einen Subjekt-Erfassungsschritt, welcher bestimmt, ob ein biometrischer Teil, welcher für biometrische Authentifizierung eines Subjekts verwendet werden kann, in dem Bildaufnahmebereich der Kamera beinhaltet ist; und
einen Steuerschritt, welcher das aufgenommene Bild als das Authentifizierungsbild handhabt, wenn ein Authentifizierungsbild-Erlangungsbefehl empfangen wird, und eine Verarbeitung durchführt, in dem Fall, in welchem der Authentifizierungsbild-Erlangungsbefehl nicht ausgegeben wurde, so dass, wenn in dem Subjekt-Erfassungsschritt bestimmt wird, dass ein biometrischer Teil nicht in dem Bildaufnahmebereich der Kamera beinhaltet ist, der Steuerschritt das aufgenommene Bild als das Überwachungsbild verwendet und, wenn in dem Subjekt-Erfassungsschritt bestimmt wird, dass ein biometrischer Teil in dem Bildaufnahmebereich der Kamera beinhaltet ist, der Steuerschritt die Bildaufnahmeoperation der Kamera stoppt.

10. Computer-lesbares Medium nach Anspruch 9, wobei der Subjekt-Erfassungsschritt beinhaltet einen Distanzmessschritt, welcher die Distanz zwischen dem Subjekt und der Kamera misst, und einen Bestimmungsschritt, welcher bestimmt, dass das Subjekt in dem aufgenommenen Bild beinhaltet ist, in dem Fall, in welchem die Distanz, die durch den Distanzmessabschnitt gemessen wird, kleiner ist als ein vorbestimmter Wert.

11. Computer-lesbares Medium nach Anspruch 9, wobei, zur Zeit des Aufnehmens des Überwachungsbilds, der Steuerschritt einen Bildaufnahmezustand der Kamera ändert, so dass der biometrische Teil nicht durch die Kamera aufgenommen werden kann.

12. Computer-lesbares Medium nach Anspruch 11, wobei der Steuerschritt als das Überwachungsbild ein aufgenommenes Bild handhabt, welches unter dem Bildaufnahmezustand der Kamera aufgenommen wurde, dass der Belichtungswert deutlich geändert wurde von dem zu der Zeit des Aufnehmens des Authentifizierungsbildes.

## Revendications

1. Dispositif de prise d'image (10) qui acquiert une image prise par une caméra capable de prendre une région prédéterminée et qui utilise l'image prise acquise en tant qu'image de surveillance ou image d'authentification, le dispositif comprenant :
une section de détection de sujet (104) qui détermine si une partie biométrique qui peut être utilisée pour une authentification biométrique d'un sujet est incluse dans la plage de prise d'image de la caméra ; et
un contrôleur (105) qui traite l'image prise en tant qu'image d'authentification lors de la réception d'une instruction d'acquisition d'image d'authentification et qui effectue un traitement, dans le cas où l'instruction d'acquisition d'image d'authentification n'a pas été émise, de sorte que, lorsqu'il est déterminé par la section de détection de sujet qu'une partie biométrique n'est pas incluse dans la plage de prise d'image de la caméra, le contrôleur utilise l'image prise en tant qu'image de surveillance et, lorsqu'il est déterminé par la section de détection de sujet qu'une partie biométrique est incluse dans la plage de prise d'image de la caméra, le contrôleur arrête l'opération de prise d'image de la caméra.

2. Dispositif de prise d'image selon la revendication 1, dans lequel
la section de détection de sujet comprend une section de mesure de distance (104) qui mesure la distance entre le sujet et la caméra, et une section de détermination qui détermine que le sujet est inclus dans l'image prise dans le cas où la distance mesurée par la section de mesure de distance est inférieure à une valeur prédéterminée.

3. Dispositif de prise d'image selon la revendication 2, dans lequel
à l'instant de prise de l'image de surveillance, le contrôleur change une condition de prise d'image de la caméra de sorte que la partie biométrique ne peut pas être prise par la caméra.

4. Dispositif de prise d'image selon la revendication 1, dans lequel
le contrôleur traite, en tant qu'image de surveillance, une image prise qui a été prise dans la condition de prise d'image de la caméra où sa valeur d'exposition est considérablement modifiée par rapport à celle à l'instant de prise de l'image d'authentification.

5. Procédé de prise d'image qui acquiert une image prise par une caméra capable de prendre une région prédéterminée et qui utilise l'image prise acquise en tant qu'image de surveillance ou image d'authentification, le procédé comprenant :
une étape de détection de sujet (S201) qui détermine si une partie biométrique qui peut être utilisée pour une authentification biométrique d'un sujet est incluse dans la plage de prise d'image de la caméra ; et
une étape de commande (S103, S107, S112) qui traite l'image prise en tant qu'image d'authentification lors de la réception d'une instruction d'acquisition d'image d'authentification et qui effectue un traitement, dans le cas où l'instruction d'acquisition d'image d'authentification n'a pas été émise, de sorte que, lorsqu'il est déterminé à l'étape de détection de sujet qu'une partie biométrique n'est pas incluse dans la plage de prise d'image de la caméra, l'étape de commande utilise l'image prise en tant qu'image de surveillance et, lorsqu'il est déterminé à l'étape de détection de sujet (S201) qu'une partie biométrique est incluse dans la plage de prise d'image de la caméra, l'étape de commande arrête l'opération de prise d'image de la caméra.

6. Procédé de prise d'image selon la revendication 5, dans lequel
l'étape de détection de sujet comprend une étape de mesure de distance qui mesure la distance entre le sujet et la caméra, et une étape de détermination qui détermine que le sujet est inclus dans l'image prise dans le cas où la distance mesurée à l'étape de mesure de distance est inférieure à une valeur prédéterminée.

7. Procédé de prise d'image selon la revendication 6, dans lequel
à l'instant de prise de l'image de surveillance, l'étape de commande change une condition de prise d'image de la caméra de sorte que la partie biométrique ne peut pas être prise par la caméra.

8. Procédé de prise d'image selon la revendication 6, dans lequel
l'étape de commande traite, en tant qu'image de surveillance, une image prise qui a été prise dans la condition de prise d'image de la caméra où sa valeur d'exposition est considérablement modifiée par rapport à celle à l'instant de prise de l'image d'authentification.

9. Support pouvant être lu par un ordinateur sur lequel est enregistré un programme de prise d'image permettant à un ordinateur d'exécuter un procédé de prise d'image qui acquiert une image prise par une caméra capable de prendre une région prédéterminée et qui utilise l'image prise acquise en tant qu'image de surveillance ou image d'authentification, le programme permettant à l'ordinateur d'exécuter un processus comprenant :
une étape de détection de sujet qui détermine si une partie biométrique qui peut être utilisée pour une authentification biométrique d'un sujet est incluse dans la plage de prise d'image de la caméra ; et
une étape de commande qui traite l'image prise en tant qu'image d'authentification lors de la réception d'une instruction d'acquisition d'image d'authentification et qui effectue un traitement, dans le cas où l'instruction d'acquisition d'image d'authentification n'a pas été émise, de sorte que, lorsqu'il est déterminé à l'étape de détection de sujet qu'une partie biométrique n'est pas incluse dans la plage de prise d'image de la caméra, l'étape de commande utilise l'image prise en tant qu'image de surveillance et, lorsqu'il est déterminé à l'étape de détection de sujet qu'une partie biométrique est incluse dans la plage de prise d'image de la caméra, l'étape de commande arrête l'opération de prise d'image de la caméra.

10. Support pouvant être lu par un ordinateur selon la revendication 9, dans lequel
l'étape de détection de sujet comprend une étape de mesure de distance qui mesure la distance entre le sujet et la caméra, et une étape de détermination qui détermine que le sujet est inclus dans l'image prise dans le cas où la distance mesurée par la section de mesure de distance est inférieure à une valeur prédéterminée.

11. Support pouvant être lu par un ordinateur selon la revendication 9, dans lequel
à l'instant de prise de l'image de surveillance, l'étape de commande change une condition de prise d'image de la caméra de sorte que la partie biométrique ne puisse pas être prise par la caméra.

12. Support pouvant être lu par un ordinateur selon la revendication 11, dans lequel
l'étape de commande traite, en tant qu'image de surveillance, une image prise qui a été prise dans la condition de prise d'image de la caméra où sa valeur d'exposition est considérablement modifiée par rapport à celle à l'instant de prise de l'image d'authentification.
